# EUROPÄISCHE PATENTSCHRIFT

(11) **EP 2 753 413 B1**
(45) Veröffentlichungstag und Bekanntmachung des Hinweises auf die Patenterteilung: **24.08.2016**
(21) Anmeldenummer: 12705105.0
(22) Anmeldetag: 14.02.2012
(51) Int. Cl.: B01D 53/02, B01D 53/50, B01J 20/28, B01J 20/32, B01J 20/04

(54) **GASABSORPTIONSGRANULAT**
GAS ABSORPTION GRANULAR MATERIAL
GRANULAT POUR L'ABSORPTION DE GAZ

(30) Priorität: 06.09.2011 DE 102011112657
(43) Veröffentlichungstag der Anmeldung: 16.07.2014
(73) Patentinhaber: Fels-Werke GmbH, 38640 Goslar (DE)
(72) Erfinder: BOENKENDORF, Ulf, 31188 Holle (DE); STUMPF, Thomas, 38667 Bad Harzburg (DE); HAASE, Christina, 38855 Nordharz OT Heudeber (DE); PESCH, Hans-Peter, 29353 Ahnsbeck (DE)
(74) Vertreter: Patent- und Rechtsanwälte Dr. Solf & Zapf
(86) Internationale Anmeldenummer: PCT/EP2012/052505
(87) Internationale Veröffentlichungsnummer: WO 2013/034314

(56) Entgegenhaltungen:
- EP-A1- 0 487 913
- EP-A1- 0 748 766
- EP-A2- 0 387 928
- EP-A2- 1 897 436
- DE-A1-102009 045 278
- US-A- 5 502 021
- US-A1- 2002 103 074

## Beschreibung

Die Erfindung betrifft ein Gasabsorptionsgranulat zur Abscheidung von Schadgasen wie SOₓ aus Abgasen, insbesondere SO₂ und/oder SO₃ aus Verbrennungsgasen thermischer Prozesse, insbesondere zur Verwendung in einem einem Verbrennungsaggregat nachgeschalteten Feststoff-Abgasreaktor, wie einem Schüttschichtfilter, Festbettabsorber, Wanderbettabsorber oder dergleichen, enthaltend aufbauagglomerierte Granalien, die mindestens eine SOₓ absorbierende Calciumverbindung in Form von Kalkhydrat und/oder Kalksteinmehl aufweisen.

Die im Rahmen der Beschreibung der vorliegenden Erfindung verwendeten Begriffe sind insbesondere in der sich mit aufbauagglomerierten Granalien befassenden DE 10 2009 045 278 A1 erläutert, weshalb insoweit auf diese Druckschrift verwiesen wird. Die sachlichen Erläuterungen, Definitionen und Begriffsbestimmungen, die in dieser Druckschrift diesbezüglich enthalten sind, gelten auch für die Beschreibung der vorliegenden Erfindung, selbst wenn nur ein Begriff in der vorliegenden Patentanmeldung verwendet wird, der durch weitere Begriffe in der Fachsprache austauschbar wäre.

In der genannten Druckschrift wird z. B. erläutert, was der Fachmann unter Aufbaugranalien bzw. Aufbaugranulation bzw. Aufbauagglomeration versteht, welche Vorrichtungen zur Herstellung dieser Aufbauagglomerate bzw. Aufbaugranalien verwendet werden, z. B. Pelletier- bzw. Granuliermischer, und dass die Raumform der Granalien des Granulats aufgrund des Granulierprozesses rund ist und die Granalien einen Schichtaufbau aufgrund des Agglomeratprozesses aufweisen.

EP 0 387 928 A2 betrifft ein Entschwefelungsmittel, das aus 3 bis 10 Gew.-% Braunkohlenasche und Rest Calciumhydroxid besteht sowie in pelletierter Form verwendet wird, wobei die Pellets einen Durchmesser von 0,2 bis 3 mm aufweisen. Hergestellt wird das Entschwefelungsmittel, indem feinkörniges Calciumhydroxid mit einem Korndurchmesser von < 50 µm und 3 bis 10 Gew.-% Braunkohlenasche mit einem Korndurchmesser < 50 µm gemischt werden. Diese Mischung wird unter Zugabe von 15 bis 40 Gew.-% Wasser pelletiert und die Grünpellets bei 20 bis 100 °C während 30 bis 300 min. getrocknet. Das Entschwefelungsmittel soll zur Entschwefelung von Verbrennungsgasen, die bei der Verbrennung schwefelhaltiger Brennstoffe in der zirkulierenden Wirbelschicht anfallen, wobei das pelletierte Entschwefelungsmittel mit dem Brennstoff in den Reaktor eingebracht und mit der Asche aus dem Reaktor ausgetragen werden soll.

Die EP 0 487 913 A1 beschreibt hochreaktive Reagentien und Zusammensetzungen für die Reinigung von Abgasen und Rauchgasen und zur Abwasserreinigung. Diese Reinigungsmittel sind Gemische von Calciumhydroxid und Zusatzstoffen, z. B. Tonen, Steinmehlen, kohlenstoffhaltigen Produkten wie Kohlenstaub und Flugaschen sowie Wasserglas, die porös sind und eine hohe spezifische Oberfläche von bis zu etwa 200 m²/g aufweisen. Mit diesen Sorbentien sollen sich neben Schwermetallen, insbesondere auch Kohlenwasserstoffe und halogenierte Kohlenwasserstoffe, Dioxine und Furane aus Abgasen und Abwässern abtrennen lassen.

Bekannt sind aufbauagglomerierte Granalien ausschließlich aus Kalkhydrat als Wirkstoff. Deren Verwendung in einem einer Verbrennung nachgeschalteten Feststoff-Gas-Reaktor hat ergeben, dass die theoretische Absorptionskapazität einer Granalie nicht erreichbar ist. SOₓ wird schalenförmig in einem relativ dünnen Außenschalenbereich unter Bildung von Calciumsulfat (CaSO₄) absorbiert. Das Kalkhydrat im Innern der Granalie bleibt z. B. bis zu 40 Gew.-% ungenutzt. Offenbar wird die Diffusion des SOₓ-Gases durch die Calciumsulfatbildung im Außenschalenbereich behindert.

Aus der EP 2 103 338 A1 ist bekannt, dass beim quasi trockenen SOₓ-Abgasreinigungsverfahren mit pulverförmigem Kalkhydrat durch Erhöhung der relativen Abgasfeuchte höhere Abscheidegrade erzielt werden können, weil sich dabei direkt um die Kalkhydratpartikel eine reaktive Zone relativ hoher Feuchte ausbildet, in der zunächst SOₓ-Gas gelöst wird, bevor es mit dem Kalkhydrat reagiert. Diesem Phänomen entsprechend wird in der Druckschrift vorgeschlagen, für die trockene SOₓ-Abgasreinigung ein feuchtes Kalkhydrat mit adsorbierter Feuchte zwischen 3 und 25 Gew.-% zu verwenden.

Die oben bereits genannte DE 10 2009 045 278 A1 beschreibt mineralische Calcium basierte aufbauagglomerierte poröse Granalien, die einen zumindest 80 Gew.-% Calciumcarbonat (CaCO₃) enthaltenden Kern (Mutterkorn) sowie zumindest eine den Kern umhüllende und Calciumhydroxid ((Ca(OH)₂) enthaltende Agglomerationsschicht aufweisen, wobei die Granalien einen Anteil von Calciumhydroxid von zumindest 60 Gew.-% bezogen auf die Gesamttrockenmasse der Granalien aufweisen und eine im Wesentlichen kugelförmige Gestalt sowie eine BET-Oberfläche von zumindest 8 m²/g haben. Diese bekannten Granalien sollen Mikroporen, Mesoporen und Makroporen enthalten. Zudem sollen die bekannten Granalien einen Wassergehalt von 2 bis 20 Gew.-% aufweisen können.

Es wurde im Rahmen der vorliegenden Erfindung erkannt, dass der hohe Wassergehalt und die Porosität dieser bekannten Granalien nicht die erwartete hohe SOₓ-Abscheideleistung erbringen und dass sich wie bei den Kalkhydrat-Granalien ohne "Mutterkorn" ein außenschaliger, den Abscheidefortschritt behindernder Absorptionsbereich bildet und im Innern der Granalien noch relativ viel unverbrauchtes bzw. ungenutztes Kalkhydrat vorhanden ist. Offenbar steht das bei Raumtemperatur adsorbierte Wasser in den Granalien nicht wie beim adsorptiv gebundenen Wasser aufweisenden, pulverförmigen Kalkhydrat reaktionsfördernd bei höheren Temperaturen zur Verfügung, bei denen die Absorptionsprozesse bzw. die Abgasreinigung ablaufen. Diese hohen Temperaturen werden bekanntlich durch Abgastemperaturen z. B. zwischen 100 und 900° C generiert. Es scheint eine Art Verstopfung durch die Calciumsulfatbildung in den äußeren Randbereichen der Granalien stattzufinden, so dass das weitere Eindringen von Gas in das Innere der Granalien behindert wird.

Aufgabe der Erfindung ist, aufbauagglomerierte, mindestens eine SOₓ-absorbierende Calciumverbindung aufweisende Granalien zu schaffen, bei denen der Absorptionsfortschritt ins Innere nicht durch eine Schalenbildung behindert wird und die einen hohen SOₓ-Abscheidegrad gewährleisten.

Die Aufgabe der Erfindung wird durch die Merkmale des Anspruchs 1 gelöst. Vorteilhafte Weiterbildungen der Erfindung werden in den von diesem Anspruch abhängigen Ansprüchen angegeben.

Die im Rahmen der Erfindung verwendeten, SOₓ absorbierenden CalciumVerbindungen sind Calciumhydroxid (Ca(OH)₂) in Mengen über 90 Gew.-% enthaltende Produkte - im folgenden Kalkhydrat genannt - und/oder Calciumcarbonat (CaCO₃) in Mengen über 90 Gew.-% enthaltende Produkte - im folgenden Kalksteinmehl genannt - . Die Calciumverbindungen werden in Form von Mehlen verwendet. Unter diesen Begriff fallen im Rahmen der Erfindung gleichermaßen die Begriffe Pulver, Puder, Stäube oder dergleichen mit Korngrößen bis 250, insbesondere bis 90 µm.

Die Erfindung betrifft hauptsächlich das Vorhandensein von Kalkhydrat und/oder Kalksteinmehl neben einem Wasser speichernden, porösen, mineralischen Produkt in einer Granalie zur SOₓ- und/oder HCl-Abscheidung aus Abgasen thermischer Prozesse. Es liegt im Rahmen der Erfindung, neben diesen wesentlichen Bestandteilen weitere Entschwefelungsmittel, z. B. Calcium-Magnesiumhydroxid oder Natriumhydrogencarbonat, in den Granalien vorzusehen. Die weiteren Bestandteile sollten in den Granalien mit nicht mehr als 25 Gew.-% enthalten sein. Die Granalien können außerdem bis z. B. 30 Gew.-% weitere Adsorptions- und/oder Absorptionsmittel, wie z. B. Aktivkohle oder -koks oder dergleichen enthalten, so dass auch andere Schadstoffe, z. B. Quecksilber oder andere Bestandteile aus zu reinigenden Abgasen entfernt werden können.

Die erfindungsgemäßen Granalien können außerdem übliche Bindemittel enthalten, die eine Verfestigung der Granalien bewirken. Beispiele dafür sind Carboxylmethylcellulose, Stärke, Glucose, Alginate, Melasse, Ligninsulfonate, Tonminerale, insbesondere Bentonit.

Die Erfindung ist demgemäß im Wesentlichen dadurch charakterisiert, dass die aufbauagglomerierten Granalien neben Kalkhydrat- und/oder Kalksteinmehlteilchen Mehlteilchen mindestens eines porösen, mineralischen, Wasser insbesondere kapillar speichernden Leichtzuschlagstoffs enthalten. Verwendet werden als Leichtzuschlagstoffmehle insbesondere Mehle aus Calciumsilikathydratprodukten, Perlit, Blähton, Blähglas, Blähschiefer, Vermiculit, Naturbims, Lavaschlacke, Tuff oder gesinterte Steinkohlenasche. Bevorzugt wird die Verwendung eines Calciumsilikathydratprodukts, insbesondere in Form von Porenbeton- und/oder Schaumbetonmehl oder eines Mehls eines gesondert hergestellten, vorzugsweise porosierten Calciumsilikathydrats. Die genannten Leichtzuschlagstoffe, insbesondere die Calciumsilikathydratprodukte, besitzen in Mehlform die Fähigkeit Wasser kapillar derart zu speichern, dass Wasser auch noch bei höheren Temperaturen, wie sie z. B. in Verbrennungsaggregaten nachgeschalteten Abgasreinigungsanlagen auftreten, in ausreichender Menge in den Granalien zur Verfügung steht und in bekannter Weise die Reaktion zwischen den SOₓ-Gasen und den Kalkhydratteilchen und/oder den Kalksteinmehlteilchen begünstigen kann, indem wahrscheinlich auf der Oberfläche der Teilchen Wasser zur Lösung von SOₓ-Gasen vorhanden ist und aus der Lösung die Calciumsulfatbildung stattfindet. In jedem Fall bewirkt der Wasser speichernde Leichtzuschlagstoff eine Erhöhung des Abscheidegrads der SOₓ-Gase. In überraschender Weise wird synergistisch auch bewirkt, dass nahezu das gesamte Calcium basierte Absorptionsmittel einer Granalie mit dem SOₓ-Gas zu Calciumsulfat reagieren kann, ohne dass äußere Reaktionsschichten den Reaktionsfortschritt blockieren. Eine "Verstopfung", wie sie bei den bekannten Granalien ähnlichen Aufbaus aber ohne Leichtzuschlagstoff auftritt, wird zumindest weitgehend vermieden.

Die erfindungsgemäß verwendeten Calciumverbindungen können mit einem Leichtzuschlagstoffmehl bei der Aufbauagglomeration wie folgt zusammengebracht werden.

Nach einer ersten Ausführungsform der Erfindung werden kernlose bzw. mutterkornlose Granalien erzeugt aus Leichtzuschlagstoffmehl und Kalkhydrat oder Leichtzuschlagstoffmehl und Kalksteinmehl oder Leichtzuschlagstoffmehl und Kalkhydrat und Kalksteinmehl.

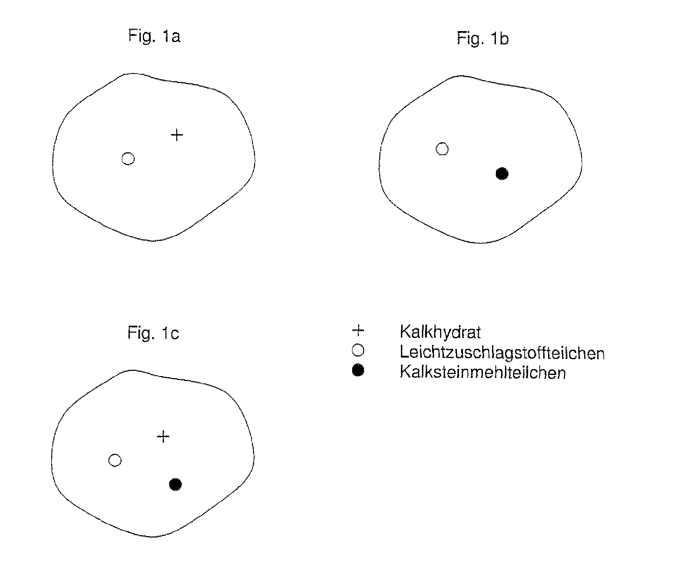

Diese erste Ausführungsform wird schematisch in den Fig. 1a, b und c dargestellt, in denen jeweils schematisch nur eine Granalie abgebildet ist. In der Granalie ist schematisch angedeutet, welche Wirkbestandteile enthalten sind.

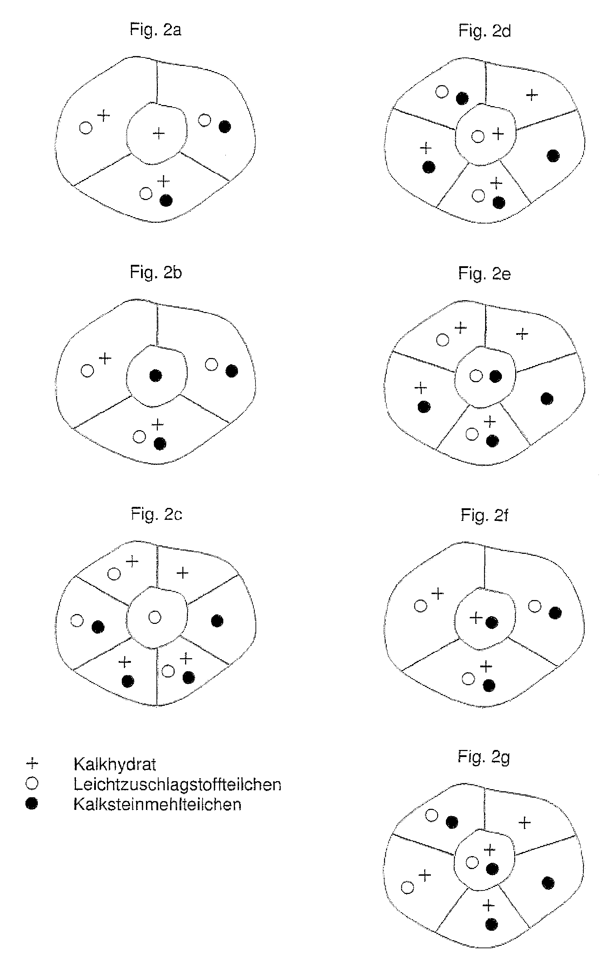

Eine weitere Ausführungsform der Erfindung sieht vor, zunächst einen Kern zu bilden bzw. ein Kernkorn zu verwenden, und auf diesen Kern bzw. das Kernkorn mindestens eine Agglomeratschicht durch Aufbauagglomeration aufzubringen. Dabei kann der Kern ein Aufbauagglomeratkern aus Kalkhydrat oder Kalksteinmehl oder Leichtzuschlagstoffmehl gebildet sein oder ein Kern aus einem Leichtzuschlagstoffkorn sein. Des Weiteren kann erfindungsgemäß ein Kern erzeugt werden aus einem Gemisch aus Leichtzuschlagstoffmehl und Kalkhydrat oder aus Leichtzuschlagstoffmehl und Kalksteinmehl oder aus Leichtzuschlagstoffmehl, Kalkhydrat und Kalksteinmehl oder aus Kalkhydrat und Kalksteinmehl. Diese Kerne können dann in einem Aufbauagglomeratprozess beschichtet werden, wobei das Beschichtungsmaterial in Abhängigkeit vom Kernmaterial auszuwählen ist, indem in jedem Fall für die Wasserspeicherung ausreichende Mengen an Leichtzuschlagstoffteilchen vorhanden sein müssen. Diese Variationsmöglichkeiten, die die Erfindung beinhaltet, ergeben sich schematisch aus Fig. 2a bis g sowie aus der folgenden Tabelle 1. In den Fig. 2a bis g ist jeweils eine Granalie schematisch dargestellt mit einem Kern und einer Aufbauagglomeratbeschichtung, wobei die Agglomeratbeschichtung in Sektoren aufgeteilt ist, um zu verdeutlichen, welche Möglichkeiten für die Beschichtungsbestandteile resultierend aus dem Aufbau des Kerns bestehen. Dabei stellt jeder Sektor eine Variationsmöglichkeit dar.

**Tabelle 1**

| **Fig. 2** | **Kernmaterial** | **Aufbauagglomeratbeschichtungen** | | | | | |
|---|---|---|---|---|---|---|---|
| a | KH | LZ | LZ | LZ | | | |
| | | KH | KS | KH | | | |
| | | | | KS | | | |
| b | KS | LZ | LZ | LZ | | | |
| | | KH | KS | KH | | | |
| | | | | KS | | | |
| c | LZ | LZ | LZ | LZ | KH | KS | KH |
| | | KH | KS | KH | | | KS |
| | | | | KS | | | |
| d | LZ | | LZ | LZ | KH | KS | KH |
| | KH | | KS | KH | | | KS |
| | | | | KS | | | |
| e | LZ | LZ | | LZ | KH | KS | KH |
| | KS | KH | | KH | | | KS |
| | | | | KS | | | |
| f | KH | LZ | LZ | LZ | | | |
| | KS | KH | KS | KH | | | |
| | | | | KS | | | |
| g | LZ | LZ | LZ | | KH | KS | KH |
| | KH | KH | KS | | | | KS |
| | KS | | | | | | |

| | | | | | | | |
|---|---|---|---|---|---|---|---|
| LZ = Leichtzuschlagstoffmehl KH = Kalkhydrat KS = Kalksteinmehl | | | | | | | |

Die mit einer Aufbauagglomeration erzeugten, gerundeten, erfindungsgemäßen Granalien weisen Korngrößen zwischen 2 und 16, insbesondere zwischen 4 und 12 mm auf. Ihre Kornfestigkeit nach DIN 4226, Teil 3, Ausgabe 1983, beträgt 3 bis 30, insbesondere 10 bis 20 kN. Die spezifische Oberfläche gemessen nach BET liegt z. B. zwischen 8 und 45, insbesondere zwischen 18 und 40 m²/g und die Porosität berechnet aus Roh- und Reindichte (Pyknometer) zwischen 20 und 80, insbesondere zwischen 40 und 70 Vol.-%.

Die Granalien werden z. B. mit Schüttgewichten zwischen 500 und 1400, insbesondere zwischen 600 und 900 kg/m³ verwendet. Die Granalien weisen zweckmäßigerweise adsorptiv gebundenes Wasser in Mengen zwischen 2 und 30, insbesondere 4 und 20 Gew.-% auf. Sie besitzen eine gute Abriebfes- und 30, insbesondere 4 und 20 Gew.-% auf. Sie besitzen eine gute Abriebfestigkeit, so dass sie in den bekannten, mit Granulaten betriebenen Abgasreinigungsanlagen verwendbar sind.

Die Aufbaugranulierung wird mit bekannten Granuliereinrichtungen betrieben, wobei als Granulierflüssigkeit insbesondere nur Wasser in die Einrichtungen eingedüst oder eingesprüht wird. Nach dem Granulieren kann eine Trocknung z. B. bei Temperaturen zwischen 80 und 250°C durchgeführt werden, um in den Granalien gezielt bevorzugte Wassergehalte einzustellen.

Wesentlich ist, dass in den Granalien die Massenverhältnisse (Gewichtsprozentverhältnisse) von Calciumverbindung bzw. Calciumverbindungen zu Leichtzuschlagstoffmehl von 1 zu 8, bis 1 zu 1 betragen, bezogen auf die Trockensubstanzen des Ausgangsgemenges dieser Stoffe.

Die Verwendung des Leichtzuschlagstoffs erbringt insbesondere die folgenden Vorteile:
- es wird eine erhöhte Porosität erzielt, die die Diffusion von Schadgasen ins Agglomeratinnere verbessert und damit auch die Abscheideleistung verbessert;
- es wird ein Wasserreservoir geschaffen, das zur Erhöhung der Abscheideleistung beiträgt;
- es können Abfallprodukte in Form von Unterkorn bzw. Mehlen verwendet werden.

Es liegt im Rahmen der Erfindung, vor dem, beim und/oder nach dem Agglomerieren Additive den Mischungen zuzusetzen, wie z. B. Stärke, Glucose, Methylcellulose, Alginate und Melasse, Tonminerale, insbesondere Bentonit, z. B. zur Steigerung der Kornfestigkeit und/oder der Abriebfestigkeit. Diese Additive sollten jedoch nicht mit mehr als 5 Gew.-%, insbesondere nicht mehr als 3 Gew.-% in einer Granalie vorhanden sein.

Die folgende Tabelle 2 zeigt trockene Dosierungen von Komponenten in Gew.-% für die Aufbauagglomerierung. Die Angaben bezüglich der Leichtzuschlagstoffmehle sind so zu verstehen, dass in jedem Fall zumindest ein Leichtzuschlagstoffmehl vorhanden sein muss in den angegebenen Mengen, wobei die Menge hauptsächlich nach der gewünschten Wasserspeicherkapazität bestimmt ist. Es können aber auch mehrere Leichtzuschlagstoffmehle enthalten sein in einer Dosierung, wobei die Mengen jeweils auf die sich daraus ergebende Wasserspeicherkapazität abgestimmt sind. Die Zusatzmittel werden nicht obligatorisch verwendet. Wenn sie aber verwendet werden, dann in den angegebenen Mengen, wobei auch dabei mehrere Zusatzmittel in einer Dosierung verwendet werden können. Die obere Grenze der jeweiligen Menge eines bestimmten Leichtzuschlagstoffmehls gilt insbesondere für die maximale Menge, wenn nur dieser eine Leichtzuschlagstoff enthalten ist. Der etwaige Rest zu 100 Gew.-% ergibt sich aus dem Zusatz eines Zusatzmittels und/oder eines anderen Leichtzuschlagstoffs. Für die Zusatzmittel gilt, dass die angegebene Menge die Grenze ist, wenn das jeweilige Zusatzmittel allein zugesetzt wird.

**Tabelle 2**

| **Absorber** | | **Leichtzuschlagstoffmehl** | | **Zusatzmittel** | |
|---|---|---|---|---|---|
| Calciumhydroxid | 20-95% | Calciumsilikathydrat | 5 - 80 % | Stärke | < 3% |
| Calciumcarbonatmehl | 0-30% | Perlit | 2 - 25 % | Glucose | < 1% |
| | | Blähton/-glas/- schiefer | 2 - 50 % | Methylcellulose | < 1% |
| | | Vermiculit | 2 - 50 % | Alginat | < 2% |
| | | Naturbims | 2 - 50 % | Melasse | < 2% |
| | | Lavaschlacke | 3 - 30 % | Ligninsulfonat | < 2% |
| | | Tuff | 2 - 50 % | Tonmineral | < 5% |
| | | gesinterte Steinkohlenflugasche | 2 - 30 % | Bentonit | < 5% |

Es liegt im Rahmen der Erfindung, die Granalien gemäß der ersten Ausführungsform mit mehreren Aufbauagglomeratschichten aufzubauen, die unterschiedliche Wirkbestandteile aufweisen (nicht dargestellt). Beispielsweise können benachbarte bzw. angrenzende Schichten aufgebaut werden, die sich bezüglich der Wirkkomponenten und/oder des Leichtzuschlagstoffs unterscheiden. Es liegt zudem im Rahmen der Erfindung, bei der zweiten Ausführungsform der Erfindung mehrere angrenzende Aufbauagglomeratschichten auf einem Kern vorzusehen (nicht dargestellt), insbesondere Aufbauschichten, die in Tabelle 1 für den jeweiligen Kern angegeben sind. In den Fig. 1 und 2 sind insofern lediglich die einfachsten Ausführungsformen mit einer Schicht des Agglomerataufbaus schematisch dargestellt. Die oben angedeuteten Variationen lassen sich bei der Herstellung der Granalien durch entsprechende Zudosierungen zu unterschiedlichen Zeitpunkten erzeugen.

Die Herstellung der erfindungsgemäßen Granalien mittels Aufbauagglomeration erfolgt in der üblichen Weise, wie sie z. B. in der DE 10 2009 045 278 A1 beschrieben worden ist.

## Patentansprüche

1. Granaliengranulat aus aufbauagglomerierten porösen Granalien für die Absorption von Schadgasen wie SOₓ aus Abgasen thermischer Prozesse, dessen Granalien bezüglich ihrer Festigkeitseigenschaften und ihrer Granalienkorngrößenverteilung zur Verwendung in einem Feststoff-Abgasreaktor ausgebildet sind und als Wirkstoff mindestens eine Calciumverbindung in Form von Kalkhydrat und/oder Kalksteinmehl enthalten,
**dadurch gekennzeichnet, dass**
die Granalien die folgenden Bestandteile in Gew.-%, bezogen auf die Trockensubstanz der Granalien, und Eigenschaften aufweisen:
- 20 bis 95 Calciumhydroxid
- 0 bis 30 Calciumcarbonatmehl
- mindestens ein Wasser kapillar speicherndes Leichtzuschlagstoffmehl aus der folgenden Gruppe:
5 bis 80 Calciumsilikathydrat
2 bis 25 Perlit
2 bis 50 Blähton oder Blähglas oder Blähschiefer
2 bis 50 Vermiculit
2 bis 50 Naturbims
3 bis 30 Lavaschlacke
2 bis 50 Tuff
2 bis 30 gesinterte Steinkohlenflugasche
- einen adsorbierten Wassergehalt zwischen 2 und 30 Gew.-%, bezogen auf die Summe der Bestandteile Calciumverbindung, Leichtzuschlagstoff und Wasser
- eine Korngröße zwischen 2 und 16 mm
- eine Kornfestigkeit nach DIN 4226, Teil 3, Ausgabe 1983 von 3 - 30 kN.

2. Granaliengranulat nach Anspruch 1,
**dadurch gekennzeichnet,dass**
die Granalien einen Wassergehalt zwischen 4 und 20 Gew.-% aufweisen.

3. Granaliengranulat nach Anspruch 1 und/oder 2,
**dadurch gekennzeichnet,dass**
das Gewichtsverhältnis von Calciumverbindung bzw. Calciumverbindungen zu Leichtzuschlagstoff in den Granalien von 1 zu 8 bis 1 zu 1 beträgt.

4. Granaliengranulat nach einem oder mehreren der Ansprüche 1 bis 3,
**dadurch gekennzeichnet,dass**
der mindestens eine Leichtzuschlagstoff ein Calciumsilikathydratprodukt in Form von Porenbeton- und/oder Schaumbetonmehl ist.

5. Granaliengranulat nach einem oder mehreren der Ansprüche 1 bis 4,
**dadurch gekennzeichnet,dass**
die Granalien Leichtzuschlagstoff und Kalkhydrat oder Leichtzuschlagstoff und Kalksteinmehl oder Leichtzuschlagstoff, Kalkhydrat und Kalksteinmehl enthalten.

6. Granaliengranulat nach einem oder mehreren der Ansprüche 1 bis 4,
**dadurch gekennzeichnet,dass**
die Granalien einen Kern aufweisen aus
Kalkhydrat und mindestens einer Agglomeratbeschichtung aus der Gemischgruppe Leichtzuschlagstoff und Kalkhydrat oder Leichtzuschlagstoff und Kalksteinmehl oder Leichtzuschlagstoff, Kalkhydrat und Kalksteinmehl
oder
Kalksteinmehl und mindestens eine Agglomeratbeschichtung aus der Gemischgruppe Leichtzuschlagstoff und Kalkhydrat oder Leichtzuschlagstoff und Kalksteinmehl oder Leichtzuschlagstoff, Kalkhydrat und Kalksteinmehl
oder
Leichtzuschlagstoff und mindestens eine Agglomeratbeschichtung aus der Gemischgruppe Leichtzuschlagstoff und Kalkhydrat oder Leichtzuschlagstoff und Kalksteinmehl oder Leichtzuschlagstoff, Kalkhydrat und Kalksteinmehl oder Kalkhydrat oder Kalksteinmehl
oder
Leichtzuschlagstoff und Kalkhydrat und mindestens eine Agglomeratbeschichtung aus der Gemischgruppe Leichtzuschlagstoff und Kalksteinmehl oder Leichtzuschlagstoff, Kalkhydrat und Kalksteinmehl oder Kalkhydrat oder Kalksteinmehl
oder
Leichtzuschlagstoff und Kalksteinmehl und mindestens eine Agglomeratbeschichtung aus der Gemischgruppe Leichtzuschlagstoff und Kalkhydrat oder Leichtzuschlagstoff, Kalkhydrat und Kalksteinmehl oder Kalkhydrat oder Kalksteinmehl
oder
Kalkhydrat und Kalksteinmehl und mindestens eine Agglomeratbeschichtung aus der Gemischgruppe Leichtzuschlagstoff und Kalkhydrat oder Leichtzuschlagstoff und Kalksteinmehl oder Leichtzuschlagstoff, Kalkhydrat und Kalksteinmehl
oder
Leichtzuschlagstoff und Kalkhydrat und Kalksteinmehl und mindestens einer Agglomeratbeschichtung aus der Gemischgruppe Leichtzuschlagstoff und Kalkhydrat oder Leichtzuschlagstoff und Kalksteinmehl oder Kalkhydrat oder Kalksteinmehl.

7. Granaliengranulat nach einem oder mehreren der Ansprüche 1 bis 6,
**gekennzeichnet** t durch Granalien einer Korngröße zwischen 4 und 12 mm, vorzugsweise einer Kornfestigkeit nach DIN 4226, Teil 3, Ausgabe 1983, 10 bis 20 kN, vorzugsweise einer spezifischen Oberfläche gemessen nach BET zwischen 8 und 45, insbesondere zwischen 18 und 40 m²/g, vorzugsweise einer Porosität zwischen 20 und 80, insbesondere zwischen 40 und 70 Vol.-%, vorzugsweise mit Schüttgewichten zwischen 500 und 1400, insbesondere zwischen 600 und 900 kg/m³.

8. Granaliengranulat nach einem oder mehreren der Ansprüche 1 bis 7,
**dadurch gekennzeichnet ,dass**
die Granalien nicht mehr als 25 Gew.-% weitere Entschwefelungsmittel, vorzugsweise Calcium-Magnesiumhydroxid oder Natriumhydrogencarbonat aufweisen.

9. Granaliengranulat nach einem oder mehreren der Ansprüche 1 bis 8,
**dadurch gekennzeichnet,dass**
die Granalien bis zu 30 Gew.-%, insbesondere bis zu 15 Gew.-% Aktivkohle oder -koks aufweisen.

10. Granaliengranulat nach einem oder mehreren der Ansprüche 1 bis 9,
**dadurch gekennzeichnet,dass**
die Granalien zusätzlich die folgenden Bestandteile in Gew.-%, bezogen auf die Trockensubstanz der Granalien, aufweisen:
< 3 Stärke
< 1 Glucose
< 1 Methylcellulose
< 2 Alginat
< 2 Melasse
< 2 Ligninsulfonat
< 5 Tonmineral

## Claims

1. A granular material composed of tumble/growth-agglomerated porous granules for the absorption of pollutant gases such as SOₓ from exhaust gases of thermal processes, the granules of which are configured in terms of their strength properties and their granule particle size distribution for use in a solid-exhaust gas reactor and contain at least one calcium compound in the form of hydrated lime and/or limestone powder as an active substance,
**characterised in that**
the granules have the following constituents in wt.%, based on the dry matter of the granules, and the following properties:
- 20 to 95 calcium hydroxide
- 0 to 30 calcium carbonate powder
- at least one lightweight aggregate powder storing water by capillary action from the following group:
5 to 80 calcium silicate hydrate
2 to 25 perlite
2 to 50 expanded clay aggregate or expanded glass or expanded shale
2 to 50 vermiculite
2 to 50 natural pumice
3 to 30 lava slag
2 to 50 tuff
2 to 30 sintered hard coal fly ash
- an adsorbed water content of between 2 and 30 wt.%, based on the sum of the calcium compound, lightweight aggregate and water constituents
- a particle size of between 2 and 16 mm
- a grain strength according to DIN 4226, part 3, 1983 edition, of 3 - 30 kN.

2. The granular material according to claim 1,
**characterised in that**
the granules have a water content of between 4 and 20 wt.%.

3. The granular material according to claim 1 and/or 2,
**characterised in that**
the weight ratio of calcium compound or calcium compounds to lightweight aggregate in the granules is from 1 : 8 to 1 : 1.

4. The granular material according to one or more of claims 1 to 3,
**characterised in that**
the at least one lightweight aggregate is a calcium silicate hydrate product in the form of autoclaved aerated concrete powder and/or foamed concrete powder.

5. The granular material according to one or more of claims 1 to 4,
**characterised in that**
the granules contain lightweight aggregate and hydrated lime or lightweight aggregate and limestone powder or lightweight aggregate, hydrated lime and limestone powder.

6. The granular material according to one or more of claims 1 to 4,
**characterised in that**
the granules have a core composed of
hydrated lime and at least one agglomerate coating from the group of mixtures of lightweight aggregate and hydrated lime or lightweight aggregate and limestone powder or lightweight aggregate, hydrated lime and limestone powder
or
limestone powder and at least one agglomerate coating from the group of mixtures of lightweight aggregate and hydrated lime or lightweight aggregate and limestone powder or lightweight aggregate, hydrated lime and limestone powder
or
lightweight aggregate and at least one agglomerate coating from the group of mixtures of lightweight aggregate and hydrated lime or lightweight aggregate and limestone powder or lightweight aggregate, hydrated lime and limestone powder or hydrated lime or limestone powder
or
lightweight aggregate and hydrated lime and at least one agglomerate coating from the group of mixtures of lightweight aggregate and limestone powder or lightweight aggregate, hydrated lime and limestone powder or hydrated lime or limestone powder
or
lightweight aggregate and limestone powder and at least one agglomerate coating from the group of mixtures of lightweight aggregate and hydrated lime or lightweight aggregate, hydrated lime and limestone powder or hydrated lime or limestone powder
or
hydrated lime and limestone powder and at least one agglomerate coating from the group of mixtures of lightweight aggregate and hydrated lime or lightweight aggregate and limestone powder or lightweight aggregate, hydrated lime and limestone powder
or
lightweight aggregate and hydrated lime and limestone powder and at least one agglomerate coating from the group of mixtures of lightweight aggregate and hydrated lime or lightweight aggregate and limestone powder or hydrated lime or limestone powder.

7. The granular material according to one or more of claims 1 to 6,
**characterised by** granules having a particle size of between 4 and 12 mm, preferably a grain strength according to DIN 4226, part 3, 1983 edition, of 10 to 20 kN, preferably a specific surface area measured according to BET of between 8 and 45, in particular between 18 and 40 m²/g, preferably a porosity of between 20 and 80, in particular between 40 and 70 vol.-%, preferably with bulk densities of between 500 and 1400, in particular between 600 and 900 kg/m³.

8. The granular material according to one or more of claims 1 to 7,
**characterised in that**
the granules comprise no more than 25 wt.% of other desulfurising agents, preferably calcium-magnesium hydroxide or sodium hydrogen carbonate.

9. The granular material according to one or more of claims 1 to 8,
**characterised in that**
the granules comprise up to 30 wt.%, in particular up to 15 wt.% activated charcoal or activated coke.

10. The granular material according to one or more of claims 1 to 9,
**characterised in that**
the granules additionally comprise the following constituents in wt.%, based on the dry matter of the granules:
< 3 starch
< 1 glucose
< 1 methyl cellulose
< 2 alginate
< 2 molasses
< 2 lignin sulfonate
< 5 clay mineral.

## Revendications

1. Granulat à base de granulés composé de granulés poreux par agglomération structurelle pour l'absorption de gaz nocifs tels que le SOx issus des gaz d'échappement de processus thermiques, dont les granulés sont réalisés, quant à leurs propriétés en terme de résistance et à leur répartition granulométrique, afin d'être utilisés dans un réacteur pour gaz d'échappement à matières solides et contiennent, en tant que principe actif, au moins un composé de calcium sous la forme d'hydrate de chaux et/ou de poudre de calcaire,
**caractérisé en ce que**
les granulés présentent les constituants, exprimés en % en poids par rapport à la substance sèche des granulés, et les propriétés qui suivent :
- 20 à 95 d'hydroxyde de calcium ;
- 0 à 30 de poudre de carbonate de calcium ;
- au moins une farine d'agrégats légers, stockant de l'eau par capillarité, issue du groupe qui suit :
5 à 80 d'hydrate de silicate de calcium
2 à 25 de perlite
2 à 50 d'argile expansée ou de verre expansé ou d'ardoise expansée
2 à 50 de vermiculite
2 à 50 de pierre ponce naturelle
3 à 30 de scories de lave
2 à 50 de tuf volcanique
2 à 30 de cendres volatiles de houille frittées
- une teneur en eau adsorbée comprise entre 2 et 30 % en poids par rapport à la somme des constituants que sont le composé de calcium, les agrégats légers et l'eau
- une granulométrie comprise entre 2 et 16 mm
- une résistance des grains selon la norme DIN 4226, 3^{e} partie, édition 1983 de 3-30kN.

2. Granulat à base de granulés selon la revendication 1,
**caractérisé en ce que**
les granulés présentent une teneur en eau comprise entre 4 et 20 % en poids.

3. Granulat à base de granulés selon la revendication 1 et/ou 2,
**caractérisé en ce que**
le rapport de poids entre le composé de calcium ou les composés de calcium et les agrégats légers présents dans les granulés présente une valeur allant de 1:8 à 1:1.

4. Granulat à base de granulés selon l'une quelconque ou plusieurs des revendications 1 à 3,
**caractérisé en ce que**
les agrégats légers sont un produit à base d'hydrate de silicate de calcium se présentant sous la forme d'une farine de béton cellulaire et/ou d'une farine de béton alvéolaire.

5. Granulat à base de granulés selon l'une quelconque ou plusieurs des revendications 1 à 4,
**caractérisé en ce que**
les granulés contiennent des agrégats légers et de l'hydrate de chaux ou des agrégats légers et de la farine de calcaire ou des agrégats légers, de l'hydrate de chaux et de la farine de calcaire.

6. Granulat à base de granulés selon l'une quelconque ou plusieurs des revendications 1 à 4,
**caractérisé en ce que**
les granulés présentent un noyau composé
d'hydrate de chaux et au moins d'un revêtement formant un agglomérat issu du groupe de mélange d'agrégats légers et d'hydrate de chaux ou d'agrégats légers et de farine de calcaire ou d'agrégats légers, d'hydrate de chaux et de farine de calcaire
ou
de farine de calcaire et au moins d'un revêtement formant un agglomérat issu du groupe de mélange d'agrégats légers et d'hydrate de chaux ou d'agrégats légers et de farine de calcaire ou d'agrégats légers, d'hydrate de chaux et de farine de calcaire
ou
d'agrégats légers et au moins d'un revêtement formant un agglomérat issu du groupe de mélange d'agrégats légers et d'hydrate de chaux ou d'agrégats légers et de farine de calcaire ou d'agrégats légers, d'hydrate de chaux et de farine de calcaire ou d'hydrate de chaux ou de farine de calcaire
ou
d'agrégats légers et d'hydrate de chaux et au moins d'un revêtement formant un agglomérat issu du groupe de mélange d'agrégats légers et de farine de calcaire ou d'agrégats légers, d'hydrate de chaux et de farine de calcaire ou d'hydrate de chaux ou de farine de calcaire
ou
d'agrégats légers et de farine de calcaire et au moins d'un revêtement formant un agglomérat issu du groupe de mélange d'agrégats légers et d'hydrate de chaux ou d'agrégats légers, d'hydrate de chaux et de farine de calcaire ou d'hydrate de chaux ou de farine de calcaire
ou
d'hydrate de chaux et de farine de calcaire et au moins d'un revêtement formant un agglomérat issu du groupe de mélange d'agrégats légers et d'hydrate de chaux ou d'agrégats légers et de farine de calcaire ou d'agrégats légers, d'hydrate de chaux et de farine de calcaire
ou
d'agrégats légers et d'hydrate de chaux et de farine de calcaire et au moins d'un revêtement formant un agglomérat issu du groupe de mélange d'agrégats légers et d'hydrate de chaux ou d'agrégats légers et de farine de calcaire ou d'hydrate de chaux ou de farine de calcaire.

7. Granulat à base de granulés selon l'une quelconque ou plusieurs des revendications 1 à 6,
**caractérisé par** des granulés présentant une granulométrie comprise entre 4 et 12 mm, de préférence une résistance des grains selon la norme DIN 4226, 3^{e} partie, édition 1983, allant de 10 à 20 kN, de préférence une surface spécifique mesurée selon la norme BET comprise entre 8 et 45, en particulier entre 18 et 40 m²/g, de préférence une porosité comprise entre 20 et 80, en particulier comprise entre 40 et 70 % en poids, de préférence une densité apparente comprise entre 500 et 1 400, en particulier comprise entre 600 et 900 kg/m³.

8. Granulat à base de granulés selon l'une quelconque ou plusieurs des revendications 1 à 7,
**caractérisé en ce que**
les granulés présentent une fraction massique inférieure ou égale à 25 % en poids d'autres agents de désulfuration, de préférence d'hydroxyde de magnésium de calcium ou de carbonate d'hydrogène de sodium.

9. Granulat à base de granulés selon l'une quelconque ou plusieurs des revendications 1 à 8,
**caractérisé en ce que**
les granulés présentent jusqu'à 30 % en poids, en particulier jusqu'à 15 % en poids de charbon actif ou de coke activé.

10. Granulat à base de granulé selon l'une quelconque des revendications 1 à 9, **caractérisé en ce que**
les granulés présentent en supplément les constituants qui suivent en % en poids par rapport à la substance sèche des granulés :
< 3 d'amidon
< 1 de glucose
< 1 de méthylcellulose
< 2 d'alginate
< 2 de mélasse
< 2 de sulfonate de lignine
< 5 de minéral argileux.
